(19) **Europäisches Patentamt**
**European Patent Office**
**Office européen des brevets**

(11) **EP 4 708 074 A1**

(12) **EUROPEAN PATENT APPLICATION**

(43) Date of publication:
**11.03.2026 Bulletin 2026/11**

(21) Application number: **24198702.3**

(22) Date of filing: **05.09.2024**

(51) International Patent Classification (IPC):
**G06F 16/3329** (2025.01) **G06F 16/335** (2019.01)

(52) Cooperative Patent Classification (CPC):
**G06F 16/33295; G06F 16/335**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **SCHOCH, Nicolai**
 **69120 Heidelberg (DE)**
• **TAN, Ruomu**
 **68309 Mannheim (DE)**
• **SAHLAB, Nada**
 **68159 Mannheim (DE)**

(74) Representative: **Maiwald GmbH**
**Engineering**
**Elisenhof**
**Elisenstrasse 3**
**80335 München (DE)**

(54) **DOMAIN-INFORMATION-MODEL-BASED GUARD-RAILING OF LLM- GENERATED CONTENT AND GENERATIVE AI-GENERATED CONTENT**

(57) There is disclosed a method for guard-railing output from a generative AI model in an industrial plant context. The method comprises comparing at least part of content of a first output provided by the generative AI model to content of a reference information model associated with a reference domain. The method further comprises providing a second output based on a result of the comparing.

Fig. 1

EP 4 708 074 A1

**Description**

FIELD OF THE INVENTION

The invention relates to a method and a data processing apparatus for domain-information-model-based guard-railing of large language model-generated content and generative artificial intelligence-generated content. The invention further relates to a data processing system, a computer-readable medium and a computer program product.

BACKGROUND

With recent technological progress, Large Language Models (LLMs) have achieved tremendous capabilities. They can extract content from natural language texts, summarize contents, answer questions even based on documents, be creative, and much more. While LLMs are able to understand content and generate remarkably coherent and contextually relevant responses, they also come with several challenges. Among others, these include potential biases in the training data, inaccurate or hallucinated content generation, as well as non-deterministic and non-reproducible output, which is mainly due to the stochastic nature of the underlying Neural Network (NN) architecture.

For industrial applications, this is often not acceptable. Hence, there is a need and room for improvement regarding hallucination reduction and guard-railing the LLM-based applications.

SUMMARY

In view of the above, it is an object of the present disclosure to overcome at least part of the drawbacks available regarding hallucination reduction and guard-railing the LLM-based applications.

Therefore, to address one or more of these drawbacks, there is provided, in a first aspect, a method for guard-railing output from a generative artificial intelligence (AI) model, for example a large language model (LLM), in an industrial plant context. The method comprises comparing at least part of content of a first output provided by the generative AI model to content of a reference information model, IM, associated with a reference domain. The method further comprises providing a second output based on a result of the comparing.

It shall be noted that the providing may be understood in that the method further comprises guard-railing the first output based on providing a second output based on a result of the comparing.

It shall be noted that by guard-railing it may be understood that the output from a generative AI model, for example from an LLM, in more detail at least part of the content of the output from the generative AI model, is compared, evaluated or checked against certain criteria. Then, based on a result of the comparing, evaluation or checking, it may be determined whether or not to further output the output from the generative AI model and, if determined for the further output, in which way the output from the generative AI model is further output, i.e. for example content of the output from the generative AI model may be filtered or modified. Hence, said in other words, by guard-railing it may be meant that the first output, in more detail at least part of the content of the first output, may be maintained (for example if a result of the comparing indicates that no filtering and/or modification is required), filtered and/or modified (for example if a result of the comparing indicates that the at least part of the content may not be maintained as it is in the first output), wherein the maintaining, the filtering and/or the modifying is based on a result of the comparing.

It shall further be noted that such reference IM that is associated with a reference domain may also be understood as a domain IM. The reference domain may be related to knowledge or may comprise knowledge of one or more predetermined domains. For example, the reference domain may be related to industrial-related applications and knowledge or may be related to non-industrial-related applications and knowledge. Non-industrial-related applications and knowledge may comprise, for example, politics, religion and sports and may thus comprise knowledge or a knowledge base that bases in the domain of politics, religion and/or sports. Moreover, beyond political, religious or sport-related content, also specific person-related or customer-related information may represent content that is not to be exposed from the generative AI model.

By content it may be meant any type of information. For example, a graphical or visual information information, a textual information, an audio information and/or a numerical information.

The second output may be a modified first output or may be a newly generated output.

The method according to the first aspect is advantageous in that it may participate in enabling guard-railing and verification of "base GenAI/LLM"-generated outputs. Further, guard-railing of the GenAI/LLM is enabled, so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

According to several examples of the present disclosure, the comparing may comprise comparing the at least part of content of the first output to respective content of one or more reference IMs each associated with a respective reference domain.

For example, the comparing may comprise that textual information comprised by the first output, for example a word, phrase, sentence and/or paragraph, is compared to one or more predetermined words, phrases, sentences and/or paragraphs, which are predetermined for a certain reference domain. For example, for a domain 'politics' predetermined words may comprise, among others, words like "election campaign" or "president", for a domain 'religion' predetermined words may comprise, among others, words like "faith" or "religious community", for a domain 'industrial application' predetermined words may comprise, among others, serial numbers of components used in process plants or technical terms and/or technical information of such components.

Hence, information or content may be efficiently evaluated as output to be permitted and/or prohibited as output for a domain of interest, for example for an industrial context domain.

According to several examples of the present disclosure, a reference IM of the one or more reference IMs may comprise a first content indicative of knowledge permitted as output for a domain of interest, and wherein the comparing may comprises comparing at least part of the content of the first output to the first content. Additionally or alternatively, a reference IM of the one or more reference IMs may comprise a second content indicative of knowledge prohibited as output for a domain of interest, and wherein the comparing may comprise comparing at least part of the content of the first output to the second content.

It shall be noted that in case the domain of interest comprises a domain 'industrial context', as already indicated above as an example, permitted content, i.e. first content, may comprise content from a domain 'industrial application'. Wherein in case the domain of interest comprises the domain 'industrial context, as already indicated above as an example, prohibited content, i.e. second content, may comprise content from a domain 'politics' or 'religion'.

Hence, efficient classification or grouping of content may be achieved.

According to several examples of the present disclosure, the comparing may comprise comparing the at least part of the content of the first output to predetermined adversarial content representing content prohibited as output for the domain of interest and/or to predetermined similarity content representing content permitted as output for the domain of interest. The comparing may further comprise determining the at least part of the content of the first output to comprise adversarial content, similarity content, and/or intermediate content representing content not categorized as adversarial content and not categorized as similarity content.

Hence, efficiency, reliability and quality in evaluating the content of the first output is increased.

According to several examples of the present disclosure, the providing may comprise guard-railing the first output by generating the second output based on at least one of:

- removing determined adversarial content from the first output,
- restraining the first output comprising adversarial content and indicating in the second output that the first output is restrained,
- highlighting determined intermediate content in the first output,
- refining determined intermediate content in the first output according to domain knowledge in the domain of interest, and
- maintaining determined similarity content in the first output.

Hence, reliability and quality of content of the second output is increased.

According to several examples of the present disclosure, the comparing may comprise determining, for the at least part of the content of the first output, a distance to predetermined adversarial content and/or to predetermined similarity content. Additionally or alternatively, the comparing may comprise processing the at least part of the content of the first output into generative AI obtained content and arranging or embedding the generative AI obtained content in the joint embedding space. The comparing may further comprise processing, based on respective reference domain knowledge represented by the one or more reference IMs, the content of the one or more reference IMs into one or more respective reference sets of triples arranged in the joint embedding space and representing the respective domain knowledge of the one or more reference IMs in the joint embedding space. The comparing may further comprise determining, for the arranged generative AI obtained content, a distance to one or more reference triples of the one or more reference sets of triples.

By generative AI obtained content, it is meant, in general, output content that is obtained from the generative AI processing input content. According to several examples of the present application, for explanation purposes without being limited thereto, the arranged generative AI obtained content may be represented by arranged "triples" that are associated with the at least part of the content of the first output.

In view thereof, i.e. in view of potentially processing the at least part of the content of the first output into a first set of triples, based on which the distances to reference triples may be determined, the following shall be noted for reasons of completeness. Namely, instead of processing such first set of triples, which were obtained from processing content from the first output, also directly taking the actual content from the first output is possible, and would also result in embedding representations, which instead of such first triples are then compared to the reference triples.

It shall be noted that, said in other words, the processing may be understood as transforming content into a structured or logical form, which allows to arrange or embed the transformed content into a multidimensional space, wherein a position in the multidimensional space, at which the transformed content is arranged, depends on the content that was transformed. Thus, a certain position in the multidimensional space is related to a certain content, and a certain content is related to a certain position in the multidimensional space.

It shall further be noted that "the at least part of the content of the first output" may be understood to comprise one or more pieces of content. Each of these one or more pieces of content may be transformed into a respective transformed piece of content that is arranged at a certain position in the multidimensional space. For example, in case "the at least part of the content of the first output" may comprise five pieces of content, five different transformed pieces of content may be arranged at five different positions in the multidimensional space.

Hence, said in other words, "the at least part of the content of the first output" may be transformed into a set of one or more transformed pieces, in particular into generative AI obtained content or a set of one or more triples, that is/are each arranged or embedded at certain positions in the multidimensional space. By multidimensional space it is meant the joint embedding space.

Therefore, it shall be noted that by triples it is meant knowledge of a domain. Namely, usually, an Information Model (IM) or Knowledge Graph (KG) represents a specific domain's knowledge in some graph format or in a hierarchical structure for example, by overlaying a semantic model, with some concepts, like e.g., the 'things' or 'elements' of a given domain, and with some interrelations, properties, and attributes between these concepts, describing 'how' the 'elements' are linked. This way, the overall knowledge of a domain can be seen as a set or combination of "triples" of concept-relation-concept. Said in other words, by use of a semantic model, a first 'element' of a given domain, for example of a domain of interest, may represent knowledge of the given domain and may have a certain relation to a second 'element' of the given domain. Hence, a piece of knowledge of the given domain comprises that the first 'element' and the second 'element' are in a certain relation to/with each other. Such piece of knowledge may be represented by a "triple".

Moreover, by joint embedding space it is meant a mathematical multidimensional space, which is calculated or designed to allow to comprise all such concepts and/or "triples". Said in other words, it may be said that the joint embedding space comprises so many dimensions that all "triples" and their respective "concept-relation-concept" are arrangeable at specific positions in this joint embedding space.

The distance determination comprises to determine one or more distances between different concepts and/or triples arranged in the same joint embedding space. Hence, such determined distance represents a distance in the joint embedding space. Moreover, the determined distances may also be understood as representing a likelihood that part of the content of the first output is to be associated with adversarial content and/or similarity content. Hence, the determined one or more distances for the at least part of the content of the first output to predetermined adversarial content and/or to predetermined similarity content may be understood as a likelihood that the at least part of the content of the first output is to be associated with predetermined adversarial content and/or with predetermined similarity content. The smaller the distance, the higher the likelihood. The larger the distance, the smaller the likelihood.

Hence, a basis is provided for efficiently comparing "the at least part of the content of the first output" with content related to one or more reference IMs based on such determined distances.

According to several examples of the present disclosure, the method may further comprise identifying, for the at least part of the content of the first output, a predetermined number of respective closest predetermined adversarial content and/or predetermined similarity content based on one or more results of the determining. Closest content may be identified based on the determined distances. Additionally or alternatively, the method may further comprise identifying, for the arranged generative AI obtained content, a predetermined number of respective closest reference triples of the one or more reference sets of triples based on one or more results of the determining.

The predetermined number of respective closest content (reference content, i.e. predetermined adversarial content and/or predetermined similarity content) or reference triples may be one, two, three, four, five or any higher number for example. The respective closest reference content may be reference content that is associated with the same reference IM or the respective closest reference content may be reference content that is associated with two or more different reference IMs. The respective closest reference triples may be reference triples that are all associated with the same reference IM or the respective closest reference triples may be reference triples that are associated with two or more different reference IMs.

Hence, efficiency for evaluating against reference triples may be controlled based on adjusting the predetermined number of respective closest content or reference triples.

According to several examples of the present disclosure, the method may further comprise, based on a result of the determining and/or based on a result of the identifying:

- categorizing at least part of the at least part of the content of the first output as similarity content associated with the first content indicative of knowledge permitted as output for the domain of interest, if the distance of the to be categorized content to a respective closest predetermined similarity content is below a predetermined threshold similarity distance;
- categorizing at least part of the at least part of the content of the first output as adversarial content associated with the second content indicative of knowledge prohibited as output for the domain of interest, if the distance of the to be categorized content to a respective closest predetermined adversarial content is below a predetermined threshold adversarial distance; and
- categorizing at least part of the at least part of the content of the first output as intermediate content, if the to be categorized content is not to be categorized as a similarity content and is not to be categorized as an adversarial content.

It shall be noted that in doing so, each to be categorized content may be categorized as similarity content, as adversarial content or as intermediate content. It shall further be noted that to be categorized content may be categorized as both similarity content and adversarial content.

The predetermined threshold similarity distance may be equal to the predetermined threshold adversarial distance or the predetermined threshold similarity distance may be different from the predetermined threshold adversarial distance. The predetermined threshold similarity distance and the predetermined threshold adversarial distance are distances in the joint embedding space.

Hence, content of the first output may be effectively and efficiently categorized.

According to several examples of the present disclosure, the method may further comprise, based on a result of the determining and/or based on a result of the identifying:

- categorizing at least part of the arranged generative AI obtained content as a similarity content associated with the first content indicative of knowledge permitted as output for the domain of interest, if the distance of the to be categorized generative AI obtained content to a respective closest reference triple associated with the first content is below a predetermined threshold similarity distance;
- categorizing at least part of the arranged generative AI obtained content as an adversarial content associated with the second content indicative of knowledge prohibited as output for the domain of interest, if the distance of the to be categorized generative AI obtained content to a respective closest reference triple associated with the second content is below a predetermined threshold adversarial distance;
- categorizing at least part of the arranged generative AI obtained content as an intermediate content, if the to be categorized generative AI obtained content is not to be categorized as a similarity content and is not to be categorized as an adversarial content.

It shall be noted that in doing so, generative AI obtained content may be categorized as a similarity content, as an adversarial content or as an intermediate content. It shall further be noted that generative AI obtained content or part of the generative AI obtained content may be categorized as both a similarity content and an adversarial content.

The predetermined threshold similarity distance may be equal to the predetermined threshold adversarial distance or the predetermined threshold similarity distance may be different from the predetermined threshold adversarial distance. The predetermined threshold similarity distance and the predetermined threshold adversarial distance are distances in the joint embedding space.

Hence, generative AI obtained content may be effectively and efficiently categorized.

According to several examples of the present disclosure, three cases may be considered:

According to a first case, the method may comprise, if the categorized content is at least categorized adversarial content, guard-railing the first output by restricting an output of the categorized content by at least one of:

- generating the second output based on removing the adversarial content from the first output, and
- generating the second output to be indicative of a notification that the first output is restrained.

For example, referring to the example as already outlined above for increasing understandability, content of the first output may be filtered by removing words like "election campaign", "president", "faith" or "religious community" for example. According to a second case, the method may comprise, if the categorized content is a categorized intermediate content, guard-railing the first output by refining an output of the categorized content by generating the second output based on at least one of:

- highlighting the intermediate content in the first output, and
- refining the intermediate content in the first output according to domain knowledge in the domain of interest.

For example, referring to the example as already outlined above for increasing understandability, content of the first output may be refined by at least one of: adding and/or adapting serial numbers of components used in process plants and by adding and/or adapting technical terms or technical information of such components. According to a third case, the method may comprise, if the categorized content is not categorized as adversarial content and is categorized similarity content, guard-railing the first output by maintaining the categorized content by generating the second output based on maintaining the similarity content in the first output.

Hence, content of the first output may be guard-railed in different ways, as adequate for the domain of interest.

According to several examples of the present disclosure, the method may further comprise receiving feedback on the provided second output; and adapting at least one of the following based on the received feedback:

- the predetermined number of respective closest reference triples,
- the predetermined threshold similarity distance,
- the predetermined threshold adversarial distance,
- an algorithm for determining the most likely adversarial content and/or similarity content,
- an algorithm for arranging content in the joint embedding space, and
- an algorithm underlying the processing of content into triples.

The method may further comprise repeating at least one of the following based on the adapting:

- the comparing,
- the providing,
- the processing,
- the determining,
- the identifying, and
- the categorizing.

The feedback may be received from a human engineer or user who evaluates the content of the first output.

Hence, due to the incorporation of a feedback loop, reliability of guard-railing content of the first output is even further increased.

According to several examples of the present disclosure, the method may comprise performing at least one of the comparing, the providing, the processing, the determining, the identifying, the categorizing and the adapting by an IM and/or an artificial intelligence, AI, algorithm or model.

Hence, automation in the guard-railing may be further increased.

According to several examples of the present disclosure, a distance below the threshold adversarial distance may be indicative of at least one of:

- a content associated with the distance is unrelated to the domain of interest and the content is removed from the first output,
- a content associated with the distance opposes predetermined values and the content is removed from the first output, and
- a content associated with the distance violates a predetermined quality threshold and the second output is indicative of an instruction to re-formulate a prompt to the generative AI model that has led to the first output.

The prompt may be provided by a human engineer or user who uses the generative AI model.

According to a second aspect, there is provided a data processing apparatus for guard-railing output from a generative AI model in an industrial plant context. The data processing apparatus comprising a processor being configured to carry out the method of the first aspect.

The data processing apparatus according to the second aspect is advantageous in that it may participate in enabling guard-railing and verification of "base GenAI/LLM"-generated outputs. Further, guard-railing of the GenAI/LLM is enabled, so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

According to a third aspect, there is provided a data processing system for guard-railing output from a generative AI model in an industrial plant context. The data processing system comprising a data processing apparatus of the second aspect. Additionally or alternatively, the data processing system comprises means for carrying out the method of the first aspect.

The data processing system according to the third aspect is advantageous in that it may participate in enabling guard-railing and verification of "base GenAI/LLM"-generated outputs. Further, guard-railing of the GenAI/LLM is enabled, so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

According to a fourth aspect, there is provided an industrial plant comprising a data processing apparatus of the second aspect and/or a data processing system of the third aspect.

By "industrial plant", according to several examples, it may be meant an industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling guard-railing and verification of "base GenAI/LLM"-generated outputs. Further, guard-railing of the GenAI/LLM is enabled, so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling guard-railing and verification of "base GenAI/LLM"-generated outputs. Further, guard-railing of the GenAI/LLM is enabled, so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling guard-railing and verification of "base GenAI/LLM"-generated outputs. Further, guard-railing of the GenAI/LLM is enabled,

so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

According to a seventh aspect, there is provided a use of at least one of a data processing apparatus of the second aspect, and/or of a data processing system of the third aspect, and/or of an industrial plant of the fourth aspect, and/or of a computer-readable medium of the fifth aspect, and/or of a computer program product of the sixth aspect.

The use according to the seventh aspect is advantageous in that it may participate in enabling guard-railing and verification of "base GenAI/LLM"-generated outputs. Further, guard-railing of the GenAI/LLM is enabled, so that generated output stays inside a domain of interest (i.e., of a certain KG / IM for example). Moreover, there is enabled a restriction of generated output to a desired content, wherein other may not be allowed. Hence, questions that are too far off a domain of interest are may not be answered by the LLM in the industrial context. Hence, it is enabled a guard-railing of the GenAI/LLM, so that "adversarial content" is not accepted or at least reduced as output. Additional counter-evaluation of base-GenAI/LLM-generated output vs. a desired IM-content for example may additionally allow for hallucination detection. Even more, there is not only provided strict guard-railing, but rather it is further enabled for Uncertainty Quantification, i.e., if an output is metrically too "far" off an IM/KG-content-embedding for example, then it may very likely be wrong or unsuitable. An overall benefit obtained through KGs/IMs may thus be the domain IM/KG, which may be an expert-based, trustable representation and lookup for a domain of interest.

Optional features of the first aspect may form part of any of the second to seventh aspects, mutatis mutandis.

The method of the first aspect may be at least in parts computer implemented.

The computer-readable medium of the fifth aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

BRIEF DESCRIPTION OF THE DRAWINGS

A detailed description will now be given, by way of example only, with reference to the accompanying drawing, in which:

- Figure 1 illustrates an overall process for guard-railing of LLM-content-generation according to several examples of the present disclosure;
- Figure 2 illustrates an example workflow according to several examples of the present disclosure;
- Figure 3 illustrates a flowchart indicative of a method according to several examples of the present disclosure; and
- Figure 4 shows a block diagram schematically illustrating a data processing apparatus according to several examples of the present disclosure.

DETAILED DESCRIPTION

While LLMs are able to understand content and to generate remarkably coherent and contextually relevant responses, they also come with several challenges. Among others, these include:

- potential biases in the training data,
- inaccurate or hallucinated content generation, as well as
- non-deterministic and non-reproducible resulting output,

which is mainly due to the stochastic nature of the underlying NN architecture.

Furthermore, they so far cannot effectively be guard-railed to answer only questions for which prior knowledge is present (i.e., by training) or for which they can retrieve the answer (i.e., e.g., using RAG). They can, for example, easily be made to answer questions outside of their domain-of-expertise or domain-of-interest.

For industrial applications, this is often not acceptable. Hence, there is a need for hallucination reduction and for guard-railing the LLM-based applications.

In view thereof, according to several examples of the present disclosure, there is provided a system and method, which builds on exploiting the underlying domain knowledge, e.g., in the form of an (existing/available) information model (IM) or specifically, a knowledge graph (KG), in order to guard-rail LLM-based output generation.

According to several examples of the present disclosure, the provided system guard-rails the generated output (e.g., as obtained from question answering) by intelligently "comparing" it to the result of querying an IM/KG, or more precisely, by finding and assessing similar IM/KG-based (triple) combinations in the respectively IM/KG-described "permitted domain representation".

Here, it is not only allowed to compare the similarity to a certain domain of interest, but it is also allowed to make sure the distance to an adversarial domain is given, too.

The overall process may be automated, so that this system can be used as a wrapper around an arbitrary LLM/generative artificial intelligence (GenAI) application.

According to several examples of the present disclosure, there is provided a solution applicable as a "plug & play" system or component for guard-railing LLM-based solutions. With access to predefined information like Knowledge Graph and/or Information Models, the provided system can check all the outputs of a user's or an applicant's LLM-based solutions and remove or highlight the content in the outputs that fall out of the guardrails and also indicate how far away they are from the context or if they belong to a category of topics to be avoided.

Thus, said in other words and in more detail, according to several examples of the present disclosure, there is provided a system and method, which builds on exploiting the underlying domain knowledge, e.g., in the form of an information model (IM) or knowledge graph (KG), which describes or defines the respective domain of interest, in order to thus guard-rail LLM-based output generation. This solution can reduce the randomness of the output generated by LLMs as well as suppress the potentially malicious prompts and questions from a user that are outside of the domain which the LLM-based software product addresses.

Usually, an IM or KG represents a specific domain's knowledge in some graph format or in a hierarchical structure by overlaying a semantic model, with some concepts (e.g., the "things" of a given domain) and some interrelations, properties, and attributes (between these concepts, describing 'how' the things are linked). This way, the overall knowledge of a domain can be seen as a set or combination of "triples" of concept-relation-concept.

An IM or KG may therefore be based on, e.g., a domain-specific vocabulary, taxonomy, or semantically more explicit manifestations, such as ontologies. Furthermore, such IMs or KGs often come with a type - instance differentiation, meaning that certain classes/concepts are seen as types, which can be instantiated by individuals (concrete instantiations of a type).

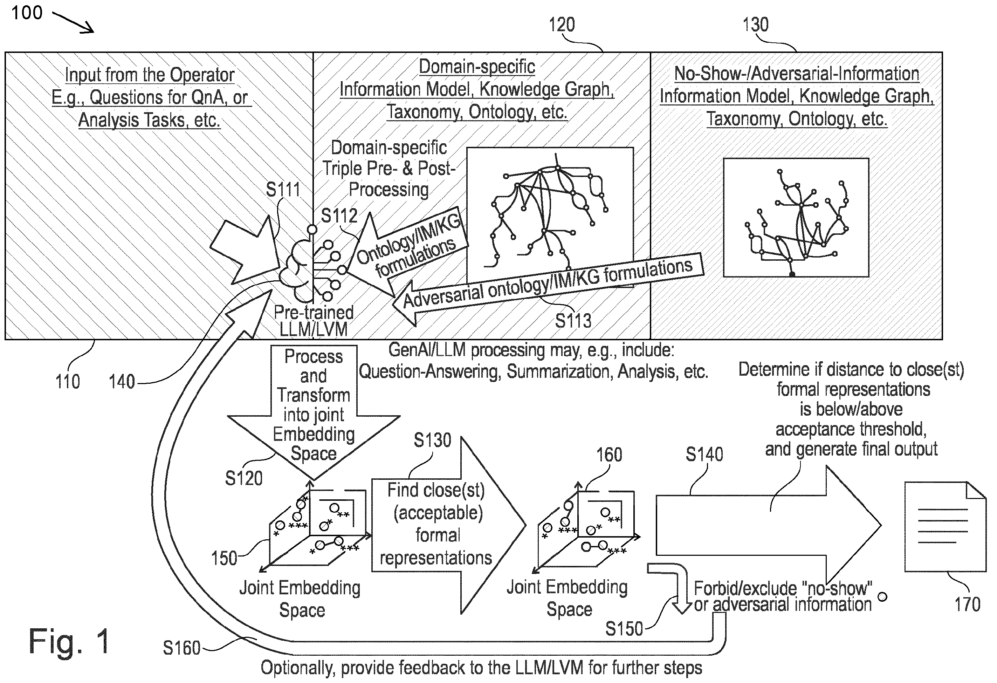

Referring now to Figure 1, Figure 1 illustrates a system and an overall process for guard-railing of LLM-content-generation according to several examples of the present disclosure.

In more detail with reference to Figure 1, a system 100 is shown that comprises a first reference IM 120, for example an IM comprising first content that is permitted for a given domain or for a domain of interest. The system 100 is shown to further comprise a second reference IM 130, for example an IM comprising second content that is prohibited for the given domain or for the domain of interest. There may be more than two reference IMs. Optionally, the system 100 may further comprise another IM 110 on which the LLM or Large Vision Model (LVM) 140 may be based. The LLM/LVM 140 may be a pre-trained LLM or an LVM for example. Optionally, the LLM/LVM 140 may receive in S111 an input from the optional IM 110. In general, the LLM/LVM 140 may receive a prompt from an operator, human engineer or user, based on which the LLM 140 generates an output, for example a first output that comprises a certain content which at least in parts depends on the provided prompt.

In S112 and S113, it is indicated to use the reference IMs 120 and 130 as a wrapper for example, to guard-rail, i.e. for example to filter and/or evaluate and/or modify, the first output, in particular at least part of the content of the first output.

Said in other words, according to several examples of the present disclosure, the provided system 100 (and corresponding method) guard-rail the LLM/GenAI-generated output, i.e. for example the first output provided by the LLM 140 (as obtained, e.g., from question answering based on the provided prompt) by intelligently "comparing" it (i.e., the generated statements) to the content of an IM/KG, for example to the content of one or more reference IMs 120, 130, or more precisely, by finding and assessing similar IM/KG-based (triple) combinations in the respectively IM/KG-described "permitted domain knowledge representation".

According to several examples of the present disclosure, with reference to S120, it is aimed to process the formal domain representation (i.e., the set of terms, concepts, relations, triples, and triple combinations; as given in the KG or IM, for example in the one or more reference IMs 120, 130) using a same pre-trained LLM//LVM/GenAI model as a further "modality" under the operator's control, and to add it, i.e. the processed formal domain representation, into the same embedding space $\mathbb{R}^n$ 150 as for other text or images.

With further "modality", it is meant that not only textual or visual information (as first output) is embedded into the joint embedding space 150, but that also the ontological information from 120 or 130 (acting as a further "modality" in a textual representation, i.e., concept names, relations, attributes, etc.) is added into the exact same embedding space 150. This is done in the same way as one can obtain multimodal text-image embeddings.

Using such one LLM/LVM/GenAI 140, there is processed and transformed, i.e., encoded, not only an uncontrolled natural language input sentence $s$ (e.g., an arbitrary sentence/question from an operator), but also all consistently permitted ontological/IM/KG formulations $c_i$, i.e., concepts and combinations (triples) of concepts and relations, into the same joint embedding space 150.

Thereon-based, for the respectively embedded natural language vector s, it may be found and assessed, in S130, the closest ontological representation embedding vectors $c_i$ from the set of all ontology-derived embedding vectors $\{c_i\}_{i \in \mathbb{N}}$. A result may be schematically illustrated in the same joint embedding space 160.

For example, in the same joint embedding space 150 according to Figure 1, as an example, triples or content associated with the ontological information from 120/with the reference IM 120 are indicated with '*', triples or content associated with the ontological information from 130/with the reference IM 130 is indicated with '**', and triples or content associated with the first output are indicated with '***'. In the same joint embedding space 160 according to Figure 1, as an example, for the triples or content associated with the first output, that are indicated with '***', closest triples are identified (see the two unmarked and unpatterned triples), that were indicated as '*' triples associated with the ontological information from 120/with the reference IM 120 in the same joint embedding space 150 according to Figure 1.

According to several examples of the present disclosure, in mathematical terms, it is provided to artificially sparsify the continuous (joint embedding) solution space $\mathbb{R}^n$ into a discretized space $\mathbb{R}^{n*}$ by accepting as final consistent solution of the "enhanced" transformation only the (e.g., top 3) deterministic embedding representations $f^*$ of the ontology/IM/KG-derived concepts, triples, and triple combinations:

$$f^*(text) \rightarrow \mathbb{R}^{n*}$$

where $f^*$ is equivalent to $g \circ f$ with the standard transformation $f$ followed by identification $g$ of the (top 3) closest ontological/IM/KG concepts or triples in $\mathbb{R}^{n*}$.

The original transformation $f: A \rightarrow \mathbb{R}^n$ (with A the space of arbitrary words or sentences of the operator) here is combined with the function $g: \mathbb{R}^n \rightarrow \mathbb{R}^{n*}$, which finds for every embedding vector in $\mathbb{R}^n$ the respectively (e.g., top 3) closest ontological/IM/KG concept(s)/triple(s) in $\mathbb{R}^{n*}$, such that

$$f^* = g \circ f : A \rightarrow \mathbb{R}^{n*}, \quad text \mapsto (g \circ f)(text) := g(f(text)) = f^*(text).$$

Note, that the above is described with *"text"* (textual representation), but also applies to image representation.

With this setup, it may be found and assessed for every natural language or image input (e.g., question from an operator) and every corresponding GenAI/LLM-generated answer text, the corresponding ontological/IM/KG representations.

Further, with reference to S140 and based on the first reference IM 120, i.e. the IM comprising the "permitted" content, defining a threshold for a "maximally-accepted metric similarity distance", for example a predetermined threshold similarity distance, to this setup allows to figure out, whether or not the GenAI/LLM-generated output and its "best" (i.e., metrically closest, using similarity methods such as Cosine Similarity or Euclidean Distance for example) ontological/IM/KG representation actually fit together, i.e., whether or not the generated output can be seen as "inside the domain of interest", i.e., being represented in the ontology/IM/KG and being permitted for the domain of interest. Having a KG gives more transparency as to how the similarity measurement was calculated.

In the same way, the evaluation can be carried out for the "Adversarial KGs", for example the second reference IM 130, i.e. the IM comprising the "prohibited" content, in order to calculate the distance between the generated output and the concepts in the Adversarial KGs, which are to be avoided as much as possible because they may address sensitive / confidential information. Another metric, namely "adversarial distance metric", can be calculated, indicating how likely the generated output covers any topic from the Adversarial KGs. The corresponding threshold for this metric will be a "minimal adversarial distance metric", for example a predetermined threshold adversarial distance, such that if the distance is smaller than the threshold, it is likely that the generated output contains information that is undesirable.

According to several examples of the present disclosure, furthermore, both metrics and the corresponding finding from the guard-railing step are used to evaluate the generated output, i.e. the first output, and determine the next action to be taken:

- If the adversarial distance metric is too small, it is likely that the generated output contains wrong information (i.e. "adversarial content") and should not be shown to the user, as indicated in S150. Specific actions, such as re-prompting with the feedback, may be necessary. The LLM 140 will be informed, as indicated in S160, about the finding that the generated output contains no-show topics and should be revised / regenerated. S160 may also be understood as representing the application of a feedback loop.
- If the Adversarial distance metric is acceptable but the similarity distance is too large, it is likely that the generated output is not accurate enough or off-topic (i.e. "intermediate content"). The LLM 140 will be requested to refine the output and correct any potential mistakes the output may contain before presenting it to the user.
- If both metrics are acceptable, this indicates that the generated output is acceptable (i.e. "similarity content") and no further adaptation is required from guard-railing perspective.

Based on the next action that are to be taken as outlined above, the system 100 as illustrated in Figure 1 then outputs a second output 170.

The overall process as shown in the above Figure 1 is automated, so that this system 100 can be used as a wrapper around an arbitrary LLM/GenAI application (i.e. the LLM 140 for example), and only the domain-specific underlying IM/KG/ontology, i.e. the one or more reference IMs 120 and 130 for example, may need to be provided.

According to several examples of the present disclosure, in the following, further functionalities and notes are provided:

- This provided system may, e.g., provide ontology-derived evidence-based confirmation that (according to the representation in the ontology) pressure is proportionally related to temperature by means of a physical equation, and that hence an output saying "if the temperature is increasing in a tank, then the pressure is increasing, too" is likely to be right; similarly, if something is inversely proportionally related, then if one thing is increasing then the LLM-output that the other thing is increasing is likely to be wrong.
- As not all information is necessarily represented in the ontology, it could, e.g., be the case, that pressure is related to, i.e., dependent of, temperature, but there is not further information how it is exactly related, then an output may be provided accordingly, saying that a relation has been found, but it cannot be confirmed, how exactly the relationship looks.

According to several examples of the present disclosure, the following other remarks are to be considered:

- The IM / KG may usually be available in some form. Optimally, as a mature ontological domain representation, but alternatively also as a simple domain vocabulary, taxonomy, schema, etc.
- The value, that the IM / KG brings, lies in the domain description, concepts, and relations, hence providing the hermeneutic basis (interpretation & meaning).
- The overall benefit of this system, obtained through KGs/IMs, is the domain IM/KG, which is an expert-based, trustable representation and lookup for the domain.
- Furthermore, whatever the output of the GenAI/LLM is, the provided system and method can take care of the "tone of speech", e.g., making sure that the language used (e.g., the terms and concepts) is domain-oriented, precise, professional language, using professional terminology, etc. and builds upon the usual domain representation.
- This appropriate "tone of speech" or "professional terminology" use can be achieved with the proposed system, by comparing the semantic meanings in the generated output with the professional terms and concepts and relations in the underlying IM/KG, and if corresponding/equivalent terms are found in the IM/KG, then these are very likely more suitable for the output.

According to several examples of the present disclosure, the following further notes and alternative or complementary approaches are still further to be considered:

- The KG can evolve and be extended with further information gained during runtime. The added triples and the overall KG are checked for consistency using logic reasoners such as HermiT to make sure the modeled concepts/ontologies and the generated triples are free from contradictions. The runtime extension of the KG enables continuous improvement with regard to similarities and possible prompts given by the operator.

According to several examples of the present disclosure, an example use case is outlined below for increasing understandability, i.e. guardrails for checking the output of operator support system.

Typical inputs:
Operators ask questions to the tool, such as "what is the status of equipment R01", "what does alarm T01_HH mean", "if I want to increase the level in L01, what should I do", "summarize the plant performance for the last shift".

Typical outputs:

- Text-based answers to questions, description of certain results.
- Visualization and statistics generated by code generation and execution for data acquisition and analysis.
- Tables and other types of formatted output.

Guardrails:

- Check the information in the generated output according to <u>domain-specific KG</u>:

    1. Check the variable names and process component names and corresponding descriptions, such as units, min / max values, alarm thresholds; make sure that all the variable and component names exist and the descriptions are true and the e.g., two variables "TI101" and "TI145" are mentioned in the generated output → check and find out that "TI101" is a valid variable name while "TI145" does not exist in the process.
    2. Check the relationship between the variables and the process components e.g., "The flow measurement FI101 connected to reaction R01 is too low" → check if FI101 is actually connected to R01.
    3. Check if the generated text is on the right topic, e.g., the process is a carbon capture plant → check whether the terminologies used in the output fall into the KG about carbon capture.
    4. Check the recommended procedure, e.g., "The following steps are recommended to increase the level in L01: ..." → check the recommended procedure against KG constructed by process documents, including operating manuals and see if the order of steps are valid.

The LLM will be requested to update the output if e.g., one of the variable names does not exist in reality.

- Check the information in the generated output against <u>Adversarial KG</u>:

    1. Check if the output contains sensitive information, e.g., user asked a question that is not relevant for the operation: "What do you think about the next US presidential election" → check the topic of the text and see how far away they are in the KG about politics, religions and other topics to be avoided.
    2. Check if the output contains confidential information, such as trade secret, e.g., user asked a question about a company's trade secret: "what is the production cost of the flow meter" → check against company KG.
    3. Check if the output contains competitor's information, e.g. user asked a question about its competitor: "how does the operator in company XYZ usually handle this problem" → check against KG of competitors and collaborators.
    4. Check if the output contains private / personal information, e.g., user asked a question about: "what is the age and the salary of the company's engineer XYZ with whom we work with" → check against company KG.

The LLM will be provided with the categories of unwanted information and asked to regenerate the output to avoid these topics.

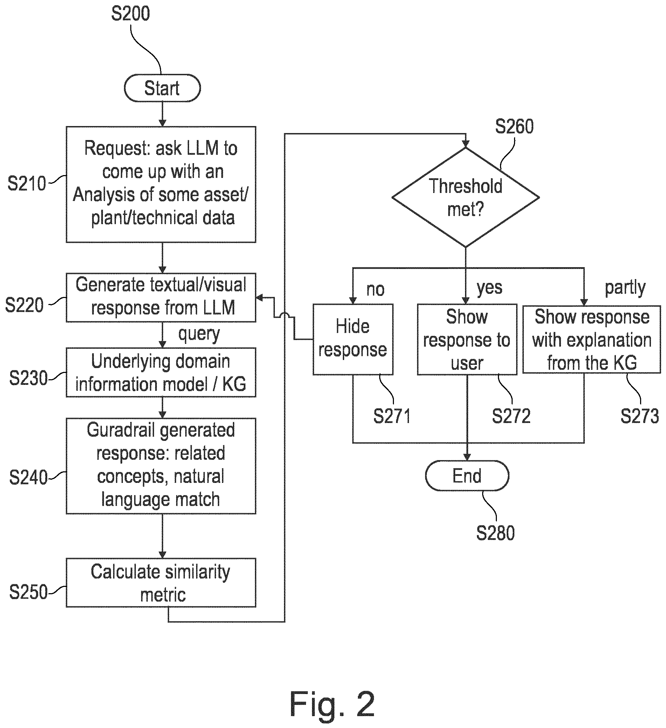

Referring now to Figure 2, Figure 2 illustrates an example workflow according to several examples of the present disclosure. In particular, referring now to Figure 2, an exemplary / proposed workflow for the provided system 100 according to Figure 1 is visualized according to several examples of the present disclosure.

The workflow starts in S200.

In S210, the workflow comprises to ask (i.e. prompt), by an operator, human engineer or user, the LLM/LVM/GenAI 140 to come up with an analysis of some asset, process plant or technical data.

In S220, the workflow comprises to generate a textual and/or visual response from the LLM/LVM 140 based on the request proved in S210.

In S230, the workflow comprises that one or more underlying domain information models / KGs, for example reference IMs 120, 130, are queried.

In S240, the workflow comprises that a response generated from the LLM/LVM 140, for example the first output, is guard-railed. For example against related concepts and it is performed a natural language match.

In S250, the workflow comprises to calculate one or more similarity metrics.

In S260, the workflow comprises to determine, whether one or more predetermined threshold distances derivable from/provided by the one or more similarity metrics are violated or met?

If no, in S271, the workflow may comprise to hide a response, for example the first output or at least part of content of the first output, is hidden or restrained. The workflow returns to step S220.

If yes, in S272, the workflow may comprise to show the response, i.e. the first output, to the operator, human engineer or user. In this case, the second output is the first output.

If the one or more thresholds are partly met, in S273, the workflow may comprises to show the response, i.e. the first output, with explanations and/or additional information from the KG, for example from the first reference IM 120, to the operator, human engineer or user.

The workflow ends in S280.

According to several examples of the present disclosure, the following features are disclosed:

- A System and Method which builds on exploiting an underlying/existing domain knowledge, e.g., in the form of an information model (IM) or knowledge graph (KG), in order to thus guard-rail and verify/evaluate LLM-based output generation.
- The provided system guard-rails the generated output (e.g., as obtained from question answering) by intelligently "comparing" it to the content of an IM/KG, or more precisely, by finding and assessing similar IM/KG-based (triple) combinations in the respectively IM/KG-described "permitted domain representation".
- The system and method can leverage two categories of KGs, namely a "Domain-specific KG" and an "Adversarial KG", such that the generated output can be made as relevant as possible to the topics specific for the use case whilst being refrained from the topics that can be sensitive or confidential.
- The overall process may be automated, so that the provided system can be used as a wrapper around an arbitrary LLM/GenAI application.
- The system may even be used beyond only strict guard-railing, but rather also for Uncertainty Quantification: If output is metrically too "far" off the IM-content-embedding, then very unlikely.
- Additionally, the system can provide a means to evaluate the "standard LLM-generated output" vs. "KG-supported LLM-generated output", and thus provide insights into how suitable the "base LLM" itself is to the domain.
- When the generated output is not satisfactory, the system may take the intermediate information from the evaluation and decide from the following: completely re-prompting the LLM to generate new outputs, asking the LLM to update the generated output, and/or still presenting the output whilst including a warning message.

According to several examples of the present disclosure, at least some of the following benefits may be achieved, when approaching the underlying problem from the neural-network / statistical learning / sub-symbolic AI side.

Namely, GenAI/LLMs can be seen as "compressing large text/image/etc. corpuses" (e.g., the entire Wikipedia or NY Times DB or WWW) into a hierarchical graph, which is represented by floating-point numbers, that are known as model weights". From an information theory perspective, this graph condenses the text's Shannon information into fewer bits. However, information is only half of the truth. The equation for information entropy does not account for intention and interpretation, or fundamentally, the "meaning". There is meaning in the minds of those who write/draw/publish the text/image, and in the minds of those interpreting the GenAI/LLM's responses/outputs. Generally, the graph of floating-point numbers, recombined in a transformer model's feedforward pass, does not comprehensively hold this meaning.

According to several examples of the present disclosure, at least some of the following benefits may be achieved, when approaching the underlying problem from the other side of the extremes, the symbolic AI perspective.

Namely, ontologies / IMs / KGs can consolidate an organization's core domain and domain knowledge, thereby also defining clearly which concepts come along with which exact meaning. Furthermore, ontologies make the domain knowledge (a) expressible in a computable language, such as OWL or DataLog, and (b) shareable with applications which build upon it and with their users. By formalizing meaningful concepts in an ontology, different applications or tools (or even intelligent agents) can be trained on diverse data which maps to the same ontological meaning. In the exact same way, also GenAI & LLM applications can become more aligned with the organization's domain knowledge representation.

Hence, according to several examples of the present disclosure, there is provided a system and method, which guard-rails a GenAI/LLM application to an underlying ontology / IM / KG, hence preserving the domain's "meaning", verifying generated outputs, and guard-railing the outputs to be "inside the domain of interest".

It shall be noted that regarding available prior art solutions, such solutions may need coding via manual configuration, in particular for the validators, and their functionalities may rather be basic. For example, when checking if the first output is on a certain topic, it may be detected the topic of the generated output and compare it against a predefined list of valid topics and another predefined list of invalid topics. In contrast thereto, with the KG-based solution as disclosed according to several examples throughout the present application, more information can be provided during a guard-railing step. The solution as disclosed according to several examples throughout the present application also reduces the effort for configuration by leveraging the predefined KGs.

Thus, according to several examples of the present disclosure, the provided solution exploits a given domain representation (IM/KG), and embeds it (i.e., obtain its abstract representation, too), using a same LLM or embedding model, which is/was also used for "understanding" and processing new/future queries or new/future LLM-based generation tasks. It may thus be extracted from the IM/KG the represented Knowledge (e.g., in the form of concepts or triples or combinations), and then compared whatever future LLM task/query/output to whether or not it is consistent with it, or similar (metrically close) to it.

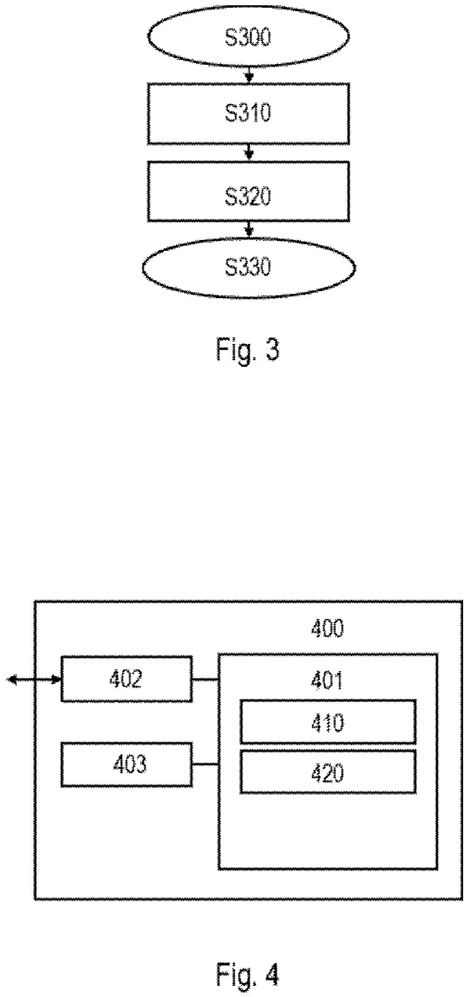

Referring now to Figure 3, Figure 3 illustrates a flowchart indicative of a method according to several examples of the present disclosure. The method is a method for guard-railing output from a generative AI model, for example a LLM, in an industrial plant context. The generative AI model may be such LLM 140 as illustrated above with reference to Figure 1.

The method starts in S300.

In S310, the method comprises comparing at least part of content of a first output provided by the generative AI model to content of a reference information model, IM, associated with a reference domain. The reference IM(s) may correspond to such IM 120 and/or IM 130 as illustrated above with reference to Figure 1. The comparing may represent at least part of such steps S120, S130, S140 and S150 as illustrated above with reference to Figure 1.

In S320, the method comprises providing a second output 170 based on a result of the comparing. The providing may represent at least part of such step S140 as illustrated above with reference to Figure 1.

The method ends in S330.

Referring now to Figure 4, Figure 4 shows a block diagram schematically illustrating a data processing apparatus 400 according to several examples of the present disclosure. In particular, according to several examples of the present disclosure, there is provided a data processing apparatus 400 for guard-railing output from a generative AI model in an industrial plant context. The data processing apparatus 400 comprises a processor 401 being configured to carry out the method of Figure 2 and/or Figure 3. The generative AI model may be such LLM 140 as illustrated above with reference to Figure 1. The data processing apparatus 400 may be understood as being a wrapper to wrap around the LLM 140.

In more detail, according to various examples, a data processing apparatus 400 being configured to carry out the method of Figure 2 and/or Figure 3 may comprise a processing circuitry, a processing function, a processing means, a processing unit or a processor 401, which enables the data processing apparatus 400 to participate in guard-railing output from a generative AI model in an industrial plant context. The processor 401 may comprise one or more processing portions or functions, wherein the processing portions or functions may be provided as one or more physical or virtual entities. The data processing apparatus 400 may comprise one or more communication interfaces 402. The data processing apparatus 400 may further comprise a memory or memory unit 403 for storing data, programs and/or instructions to be executed by the processor. The memory 403 may be a memory internal to the data processing apparatus 400 or may be a memory external to the data processing apparatus 400, for example at a cloud server. The processor 401 may comprise one or more portions, which enable the data processing apparatus 400 to execute the method of Figure 3 for example. According to several examples of the present disclosure, a comparing portion 410 may be configured to perform such comparing according to S310 of Figure 3, and a providing portion 420 may be configured to perform such providing according to S320 of Figure 3.

According to several examples of the present disclosure, the respective portions of the data processing apparatus 400 may also be understood as means for carrying out the certain function.

According to several examples of the present disclosure, there is provided a data processing system for guard-railing output from a generative AI model in an industrial plant context. The data processing system comprises the data processing apparatus 400 according to Figure 4 and/or comprises means for carrying out the method according to Figure 2 and/or Figure 3. The generative AI model may be such LLM 140 as illustrated above with reference to Figure 1. The data processing system may be such system 100 as illustrated above with reference to Figure 1.

According to several examples of the present disclosure, there is provided an industrial plant comprising the data processing apparatus 400 according to Figure 4 and/or the data processing system as outlined above.

According to several examples of the present disclosure, there is provided a computer-readable medium comprising instructions which, when executed by a computing system, causes the computing system to perform the method according to Figure 2 and/or Figure 3. The computer-readable medium may be transitory or non-transitory, volatile or non-volatile.

According to several examples of the present disclosure, there is provided a computer program product comprising instructions which, when executed by a computing system, enable or cause the computing system to perform the method according to Figure 2 and/or Figure 3. The computer program product may comprise a computer-readable medium comprising instructions of the computer program product. The computer-readable medium as mentioned above may have stored thereon the computer program product.

According to several examples of the present disclosure, there is provided a use of the data processing apparatus 400, the data processing system as outlined above, the industrial plant as outlined above, the computer-readable medium as outlined above and/or the computer program product as outlined above.

The method according to Figure 2 and/or Figure 3 may be at least in parts computer implemented.

Optional features of the method according to Figure 3 may form part of the data processing apparatus 400, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

**Claims**

1. A method for guard-railing output from a generative artificial intelligence, AI, model, in an industrial plant context, the method comprising:

comparing at least part of content of a first output provided by the generative AI model to content of a reference information model, IM, associated with a reference domain; and
providing a second output based on a result of the comparing.

2.   The method according to claim 1, wherein the comparing comprises comparing the at least part of content of the first output to respective content of one or more reference IMs each associated with a respective reference domain.

3.   The method according to claim 1 or 2,

wherein a reference IM of the one or more reference IMs comprises a first content indicative of knowledge permitted as output for a domain of interest, and wherein the comparing comprises comparing at least part of the content of the first output to the first content, and/or
wherein a reference IM of the one or more reference IMs comprises a second content indicative of knowledge prohibited as output for a domain of interest, and wherein the comparing comprises comparing at least part of the content of the first output to the second content.

4.   The method according to any of claims 1 to 3,
wherein the comparing comprises comparing the at least part of the content of the first output

to predetermined adversarial content representing content prohibited as output for the domain of interest and/or
to predetermined similarity content representing content permitted as output for the domain of interest;
wherein the comparing further comprises determining the at least part of the content of the first output to comprise
adversarial content,
similarity content, and/or
intermediate content representing content not categorized as adversarial content and not categorized as similarity content.

5.   The method according to any of claims 1 to 4,
wherein the providing comprises guard-railing the first output by generating the second output based on at least one of

removing determined adversarial content from the first output,
restraining the first output comprising adversarial content and indicating in the second output that the first output is restrained,
highlighting determined intermediate content in the first output,
refining determined intermediate content in the first output according to domain knowledge in the domain of interest, and
maintaining determined similarity content in the first output.

6.   The method according to any of claims 1 to 5, wherein the comparing comprises

determining, for the at least part of the content of the first output, a distance to predetermined adversarial content and/or to predetermined similarity content; and/or
processing the at least part of the content of the first output into generative AI obtained content and arranging the generative AI obtained content in a joint embedding space;
processing, based on respective reference domain knowledge represented by the one or more reference IMs, the content of the one or more reference IMs into one or more respective reference sets of triples arranged in the joint embedding space and representing the respective domain knowledge of the one or more reference IMs in the joint embedding space; and
determining, for the arranged generative AI obtained content, a distance to one or more reference triples of the one or more reference sets of triples.

7.   The method according to claim 4 or 6, further comprising

identifying, for the at least part of the content of the first output, a predetermined number of respective closest predetermined adversarial content and/or predetermined similarity content based on one or more results of the determining according to claim 4 and/or 6; and/or
identifying, for the arranged generative AI obtained content, a predetermined number of respective closest reference triples of the one or more reference sets of triples based on one or more results of the determining according to claim 6.

8. The method according to claim 6 or 7, further comprising, based on a result of the determining and/or based on a result of the identifying,

categorizing at least part of the at least part of the content of the first output as similarity content associated with the first content indicative of knowledge permitted as output for the domain of interest,
if the distance of the to be categorized content to a respective closest predetermined similarity content is below a predetermined threshold similarity distance;
categorizing at least part of the at least part of the content of the first output as adversarial content associated with the second content indicative of knowledge prohibited as output for the domain of interest,
if the distance of the to be categorized content to a respective closest predetermined adversarial content is below a predetermined threshold adversarial distance; and
categorizing at least part of the at least part of the content of the first output as intermediate content,
if the to be categorized content is not to be categorized as a similarity content and is not to be categorized as an adversarial content.

9. The method according to claim 6 or 7, further comprising, based on a result of the determining and/or based on a result of the identifying,

categorizing at least part of the arranged generative AI obtained content as a similarity content associated with the first content indicative of knowledge permitted as output for the domain of interest,
if the distance of the to be categorized generative AI obtained content to a respective closest reference triple associated with the first content is below a predetermined threshold similarity distance;
categorizing at least part of the arranged generative AI obtained content as an adversarial content associated with the second content indicative of knowledge prohibited as output for the domain of interest,
if the distance of the to be categorized generative AI obtained content to a respective closest reference triple associated with the second content is below a predetermined threshold adversarial distance; and
categorizing at least part of the arranged generative AI obtained content as an intermediate content,
if the to be categorized generative AI obtained content is not to be categorized as a similarity content and is not to be categorized as an adversarial content.

10. The method according to claim 8 or 9, wherein the providing the second output comprises:

if the categorized content is at least categorized adversarial content,
guard-railing the first output by restricting an output of the categorized content by at least one of

generating the second output based on removing the adversarial content from the first output, and
generating the second output to be indicative of a notification that the first output is restrained,

if the categorized content is categorized intermediate content,
guard-railing the first output by refining an output of the categorized content by generating the second output based on at least one of

highlighting the intermediate content in the first output, and
refining the intermediate content in the first output according to domain knowledge in the domain of interest,

if the categorized content is not categorized as adversarial content and is categorized similarity content,
guard-railing the first output by maintaining the categorized content by generating the second output based on maintaining the categorized content in the first output.

11. The method according to any of claims 1 to 10, further comprising

receiving feedback on the provided second output;
adapting at least one of the following based on the received feedback:

the predetermined number of respective closest reference triples,
the predetermined threshold similarity distance,

the predetermined threshold adversarial distance,
an algorithm for determining the most likely adversarial content and/or similarity content,
an algorithm for arranging content in the joint embedding space, and
an algorithm underlying the processing of content into triples; and repeating at least one of the following based on the adapting:

the comparing,
the providing,
the processing,
the determining,
the identifying, and
the categorizing.

12. The method according to any of claims 6 to 11, wherein a distance below the threshold adversarial distance is indicative of at least one of:

- a content associated with the distance is unrelated to the domain of interest and the content is removed from the first output,
- a content associated with the distance opposes predetermined values and the content is removed from the first output, and
- a content associated with the distance violates a predetermined quality threshold and the second output is indicative of an instruction to re-formulate a prompt to the generative AI model that has led to the first output.

13. A data processing apparatus for guard-railing output from a generative AI model in an industrial plant context, the data processing apparatus comprising a processor being configured to carry out the method of any of claims 1 to 12.

14. A computer-readable medium comprising instructions which, when executed by a computing system, cause the computing system to perform the method of any of claims 1 to 12.

15. A computer program product comprising instructions which, when executed by a computing system, enable and/or cause the computing system to perform the method of any of claims 1 to 12.

Fig. 1

EP 4 708 074 A1

S200

Start

S210 — Request: ask LLM to come up with an Analysis of some asset/ plant/technical data

S220 — Generate textual/visual response from LLM

query

S230 — Underlying domain information model / KG

S240 — Guradrail generated response: related concepts, natural language match

S250 — Calculate similarity metric

S260 — Threshold met?

no — Hide response — S271

yes — Show response to user — S272

partly — Show response with explanation from the KG — S273

End

S280

Fig. 2

Fig. 3

Fig. 4

Europäisches
Patentamt
European
Patent Office
Office européen
des brevets

# EUROPEAN SEARCH REPORT

**Application Number**

EP 24 19 8702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jarvis Colin: "How to implement LLM guardrails \| OpenAI Cookbook", <br><br> , <br> 19 December 2023 (2023-12-19), <br> XP093251192, <br> Retrieved from the Internet: <br> URL:https://web.archive.org/web/2024071309 1701/https://cookbook.openai.com/examples/ how_to_use_guardrails <br> * pages 1, 5, 6 * <br> ----- | 1-15 | INV. <br> G06F16/3329 <br> G06F16/335 |
| X | Inan Hakan ET AL: "Llama Guard: LLM-based Input-Output Safeguard for Human-AI Conversations", <br><br> , <br> 13 December 2023 (2023-12-13), <br> XP093251197, <br> Retrieved from the Internet: <br> URL:https://arxiv.org/pdf/2312.06674 <br> * abstract * <br> * page 2, paragraph 2 * <br> * 2 Safety Risk Taxonomy; <br> page 2 * <br> * 2.1 The Llama Guard Safety Taxonomy & Risk Guidelines; <br> pages 2-3 * <br> * 3.1 Input-output Safeguarding as Instruction-following Tasks; <br> pages 3-4 * <br> ----- | 1-15 | |
| | | | **TECHNICAL FIELDS SEARCHED (IPC)** <br><br> G06F |

The present search report has been drawn up for all claims

| Place of search | Date of completion of the search | Examiner |
|---|---|---|
| The Hague | 17 February 2025 | Martínez Espuche, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)